# EUROPEAN PATENT SPECIFICATION

(11) **EP 3 764 026 B1**
(45) Date of publication and mention of the grant of the patent: **07.06.2023**
(21) Application number: 20185203.5
(22) Date of filing: 10.07.2020
(51) Int. Cl.: F25B 29/00, F24D 3/18, F25B 41/00, F25B 49/02, F25B 6/04, F24D 3/08, F25B 40/02, F25B 40/06, F24D 17/02, F24D 19/10, F25B 41/20, F25B 41/24, F24F 5/00

(54) **HEATING AND COOLING SYSTEMS, AND APPARATUS FOR CONVERSION OF AN EXISTING HEATING SYSTEM AND AN EXISTING REFRIGERATION SYSTEM INTO A HEATING AND COOLING SYSTEM**
HEIZ- UND KÜHLSYSTEME UND VORRICHTUNG ZUR UMWANDLUNG EINES BESTEHENDEN HEIZSYSTEMS UND EINES BESTEHENDEN KÜHLSYSTEMS IN EIN HEIZ- UND KÜHLSYSTEM
SYSTÈMES DE CHAUFFAGE ET DE REFROIDISSEMENT, ET APPAREIL POUR LA CONVERSION D'UN SYSTÈME DE CHAUFFAGE EXISTANT ET D'UN SYSTÈME DE RÉFRIGÉRATION EXISTANT EN UN SYSTÈME DE CHAUFFAGE ET DE REFROIDISSEMENT

(30) Priority: 10.07.2019 GB 201909915
(43) Date of publication of application: 13.01.2021
(73) Proprietor: RooBear Limited, Wetherby LS23 7FS (GB)
(72) Inventor: DOWNHAM, Lee, Wetherby, LS23 7FS (GB)
(74) Representative: Cookson, Barbara Elizabeth

(56) References cited:
- EP-A1- 3 453 992
- WO-A2-2007/146050
- US-B1- 9 915 436

## Description

### Technical Field

The present invention relates to two alternative heating and cooling systems, and to an apparatus for conversion of an existing heating system and an existing refrigeration system into a heating and cooling system. Thereby it relates to a system for using waste heat generated by refrigeration apparatus and, more specifically, for such systems in environments where there is also a demand for hot water, for example air-conditioned health clubs, manned factories that use chillers, and retail environments such as butchers shops having cold rooms as well as domestic environments.

It will be noted that the present invention is particularly suited to the technical field where condensers cannot be located externally of the building and must be located in an internal space such as a plant room. In this description we will refer to this application as the commercial embodiment.

The present invention also has particular application where a single system is required to provide both heating and cooling including the provision of heat when cooling is not required. In this description, we will refer to this application as the domestic embodiment while understanding that it is not limited to such applications. Even if a condenser can be located externally, the use of the present invention results in a reduction in the emission of greenhouse gases and carbon emission.

### Technical problem

The usual method of rejecting heat from a refrigeration system is to place the condenser in a remote location, usually outside the building, for example on the roof. However, in certain circumstances where there is limited space so that no external wall is available, or the building is listed, a separate plant room is used. One of the common issues with any plant room or indoor location is that the space then becomes hot due to the heat rejected by the condensing unit. The system will then fail or additional ventilation and extracting systems have to be installed to extract the heat built up by the condensing unit.

The present invention is designed to address the technical problem of recovering and utilising that waste heat in such an environment.

Another problem is that there is a requirement for energy efficiency and this is difficult to achieve with an internal plant room. The present invention improves energy efficiency.

Since many refrigeration systems are already installed, there is a requirement for a solution that can be retrofitted to an existing system to provide heat efficiently.

Another technical problem that arises, particularly in the domestic situations, is to have an efficient system which provides both heating and cooling, simultaneously in hot weather conditions when hot water is required as well as refrigeration, and only heating in cold weather conditions. Such a system needs to be environmentally friendly and efficient. Air or ground source heat pumps are the only solutions available for the domestic user who wish to reduce carbon emissions. However, they are not integrated systems capable of providing the complete domestic heating/cooling/hot water energy requirement of the home in an efficient manner. Ground source heat pumps are expensive to install and intrusive due to the boring down into the ground which is needed to install the components. Air source heat pumps have a lower cost but do not offer consistent efficiencies due to the fluctuation in ambient air temperatures.

### Prior Art

It has been proposed to pass refrigerant from the compressor via a heat exchanger inside a water tank before it reaches the condenser as described in US4293323 COHEN (6 October 1981) . However, such a system requires substantial modification to the existing system and could not be retrofitted.

A disadvantage of existing systems is that there is still a need for a boiler if hot water or heating is required when there is no demand from the refrigeration system such as during the winter months.

Standard air conditioning or comfort cooling systems and heat pump systems for domestic use typically use a 4 way valve so that they can be switched between heating and cooling operation. However it is still necessary to provide an independent hot water system which is required regardless of the heating/cooling setting. DAIKIN IND LTD, for example, US20120036876 (16 February 2012) proposes a variable capacity compressor heat pump unit capable of being connected to a plurality of usage units having differing heat demands. A heat pump will generate hot water and heating but no cooling. An air conditioning system will provide cooling and heating but not hot water.

WO01/20234A1 (UT BATTELLE LLC) 22 March 2001 describes a refrigeration system in which waste heat generated by the system is used to supply a hot water supply. When refrigeration is not needed, the device alternately becomes a dedicated heat pump water heater by transferring ambient heat to the water cooled condenser.

Document EP3453992A1 describes a heating and cooling system configured for four different modes of operation without using a four-way valve. This system represents the closest prior art to the present invention.

### Solution of the Present Invention

The system of the present invention is therefore designed to resolve the above described technical problems and offer a high coefficient of performance (COP) whilst reducing carbon emission and permitting the use of renewable energy technology.

The invention is defined in the appended claims. It concerns two alternative heating and cooling systems, respectively defined by appended independent claims 1, 2, and an apparatus for conversion of an existing heating system and an existing refrigeration system into a heating and cooling system, defined by appended independent claim 6.

### Description of the Drawings

In order that the invention can be well understood some embodiments thereof will now be described, by way of example only, with reference to the accompanying diagrammatic drawings, in which:
Figure 1 shows a high level block diagram showing some of the additional components added to a refrigeration system in order to provide for heat recovery and satisfy heating demand when there is no cooling demand;
Figure 2 shows a piping example of how the additional components could be retrofitted into an existing system where a heating system supplies usage units including a hot water cylinder and radiators; where this Figure shows only part of the features of the invention.
Figure 3 shows a diagram of a domestic embodiment of the system in cooling mode with heat recovery according to an alternative of the present invention;
Figure 4 shows a diagram of a domestic embodiment of the system in heating mode without refrigeration operational according to an alternative of the present invention; and
Figure 5 shows a diagram of a commercial embodiment of the system in heating mode without refrigeration operational, corresponding to a mode of another alternative of the invention.

### Description of Embodiments

In a commercial embodiment the system is installed internally of a building with a chilled space and a separate plant room. The plant room could be a work area or office space as the system avoids significant rejection of heat into the local environment. Similarly a domestic embodiment would be installed internally of the home. In other circumstances, where there is no internal space available, the system could be installed outside in a suitably insulated environment and still maintain its efficiencies.

The system of the present invention, which is defined by the claims, for the commercial embodiment makes use of a "box" 2 of additional components which are intended to be retrofitted to an existing refrigeration system. The box could include a physical enclosure but the additional components could, alternatively, be exposed within an existing plant room. The term box is simply used to show the parts of the system which are needed to be retrofitted to an existing system to implement the present invention. The use of compact plate heat exchangers facilitates retrofitting and efficient energy operation as described below.

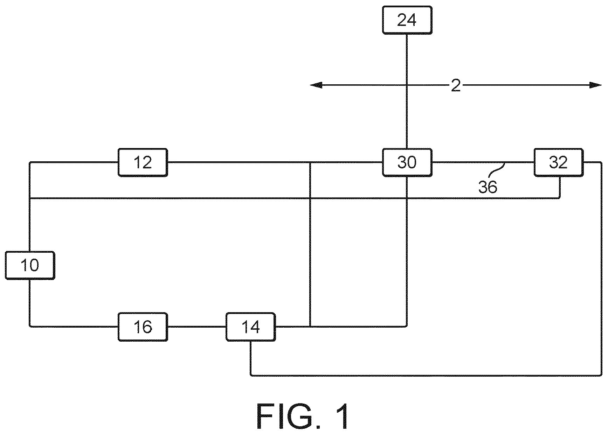

As shown in figure 1, a conventional refrigeration system of the type under consideration comprises an evaporator 10 within a chilled spaced such as a cold room, a compressor 12, a condenser coil which together form a condensing unit 15. The condensing unit is located in an internal space, such as a plant room, separate from the chilled space. A thermostatic/electronic expansion valve or any kind of metering device 16 completes the system. Pipework allows refrigerant to pass in the standard circular route from the evaporator via the compressor and condenser and metering device back to the evaporator. There are four main components of a refrigeration system which are: compressor, condenser, metering/expansion device and evaporator. The condensing unit is made up of the compressor, condenser and a few other minor parts. The four stages in order are as follows:
Step 1) - Compression, Step 2) - Condensation, Step 3) - Throttling and expansion, Step 4) - Evaporation.

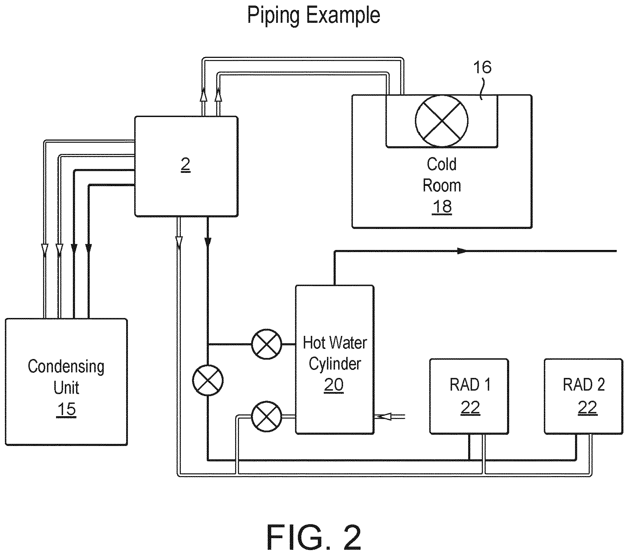

The system of the invention is intended to be used in substitution for a boiler in a hot water system and/or radiant heating system. In figure 2, an example for some of the elements of the present invention is shown where the water which is heated in the box 2 is the return and flow water for usage units, namely a hot water cylinder 20 and radiators 22. It will be appreciated that the recovered heat can be used in various types of heating or hot water supply systems and figure 2 represents just one possible embodiment. In the remainder of this description, we will refer to the "heating system" 24 as the usage unit or units which uses the recovered heat and it may, for example, consist only of an on demand hot water system, such as might be required if the system were being installed in a gymnasium, or also include additional radiator units.

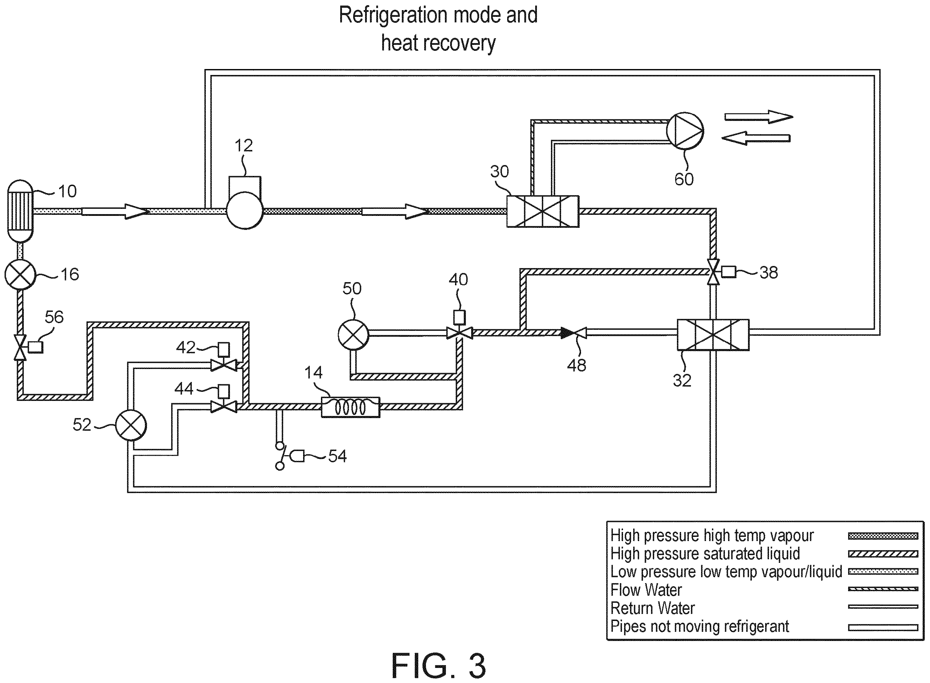

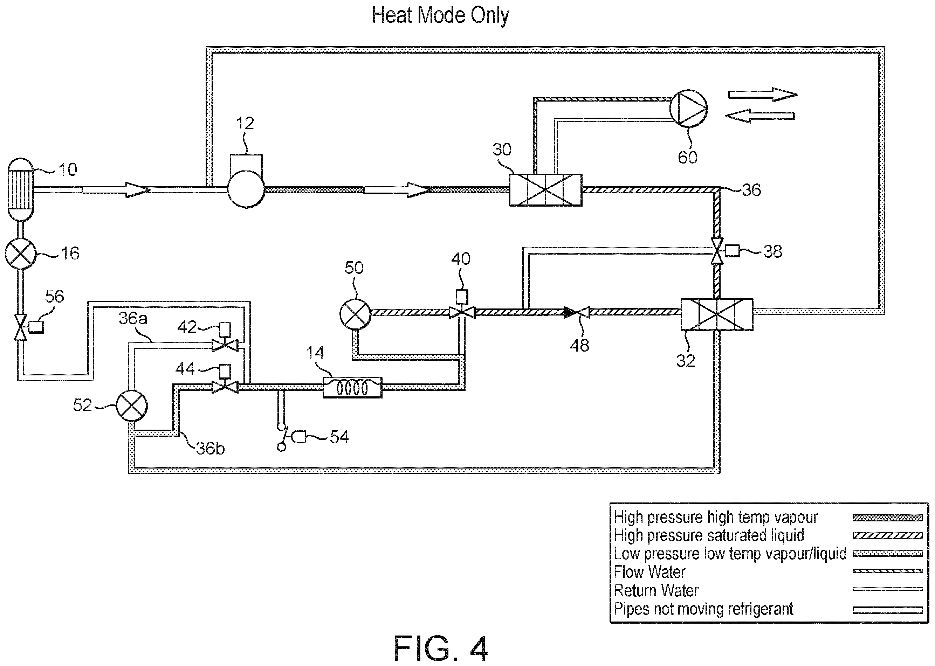

Figure 2 is a piping example showing how the evaporator 16 is located in a cold room 18. The box 2 and condensing unit 15 can be located in any convenient internal space. A more detailed description of the components needed to convert an existing conventional refrigeration and isolated heating system 24 to operate in accordance with the invention, and their method of operation will now be described with reference to figures 3 and 4.

The box 2 contains two plate heat exchangers 30, 32 connected in series via a valve 38 (which is closed in standard cooling mode). When the refrigeration system is operating, the refrigerant passes only through the first heat exchanger before returning to the condensing unit15. The water required by the heating system 24 is heated by flowing through a second side of this first heat exchanger 30 with the hot gaseous refrigerant exiting the compressor flowing through the first side. The refrigerant exits the first heat exchanger as a high pressure liquid. The condensing unit 15 can therefore be located in any internal space since it rejects very little heat into its location as all waste energy and heat is captured by the first heat exchanger within the box 2. When the refrigeration system is running, the refrigerant follows its usual path: compressor 12 to plate heat exchanger 30 to condenser coil 14 to expansion device 16 to evaporator 10 returning to the compressor 12. Any heat generated is free as the refrigeration system is running and the heat is a by-product of this operation. The second heat exchanger 32 is bypassed when the system is in cooling mode with heat recovery as shown in figure 3.

It will be appreciated that in this mode, the system can provide heating, cooling and hot water at the same time whilst reducing the environmental impact.

When heat is required but the refrigeration system is not operational, the second heat exchanger is switched into operation. Refrigerant now follows the alternative path 36 as shown in figure 4. In this mode the second heat exchanger 32 exchanges heat between two different flows of the refrigerant so that the system can act as a boiler when cooling is not required. Switching is controlled by the operation of valves 38, 40, 42, 44, 56. The first valve 38 is a three-way valve in the pipe from the exit of the first side of the first heat exchanger and diverts the flow so that refrigerant exiting the compressor 12 travels through the first heat exchanger 30 into an input of the first side of the second heat exchanger 32. The refrigerant exiting the second heat exchanger travels via a non-return valve 48, a second three-way valve 40 to a second expansion device 50 which reduces the temperature of the refrigerant to a liquid at say -10°C before it enters the condenser 14 which in this mode operates as an evaporator changing the state of the refrigerant to a gas at say +5 °C providing a heat gain. The heat gained from the space in which the condenser coil is located makes up our COP.

The flow path 36 from the output of the condenser 14 is controlled by the solenoid valves 42, 44. A low pressure switch 54 in the output pipe from condenser 14 determines which of two alternative paths 36a, 36b this recycled refrigerant takes.

At switching between cooling and heating only modes the pressure of the vapour is still high and therefore the flow is switched by solenoid valves 42, 44 so that it goes through path 36a and via a third expansion device 52 which reduces the pressure to a predetermined value. That value is determined by the setting of the low pressure switch 54. Liquid refrigerant at or below the selected low pressure is then passed back to the second side of the second heat exchanger 32 where it flashes off and boils away inside the second plate heat exchanger before returning to the compressor 12 so that there is a flow of hot refrigerant to the first heat exchanger (which is not receiving hot refrigerant from the inactive refrigeration system) which can be used to exchange with the water from the heating system 24. Once the pressure at the output of the condenser 14 has reduced, valve 42 can be closed and valve 44 opened to bypass the third expansion device 52.

A solenoid valve 56 is provided in the pipework to the chilled space to cut off flow to the first or main expansion device 16 of the refrigeration system, when cooling is not required so that the only flow to the compressor 12 is that from the second heat exchanger 32.

The heating system 24 employs a water pump 60 to drive water through the first heat exchanger 30. When there is no heat demand the pump will be switched off.

A control system, forming part of a switching means, receives inputs from conventional thermostats and timers of the heating system and cooling system to control the operation of the various valves (also forming part of the switching means) and the water pump depending on the demands for heating and cooling. The electrical components and thermostats can be brought together on a printed circuit board. If equipped with a wireless transceiver the system can be controlled remotely using internet functionality.

The system works by redirecting the flow of refrigerant and changing its state or temperature so as not to affect the cooled space and still generate heat when needed.

### Commercial Embodiment

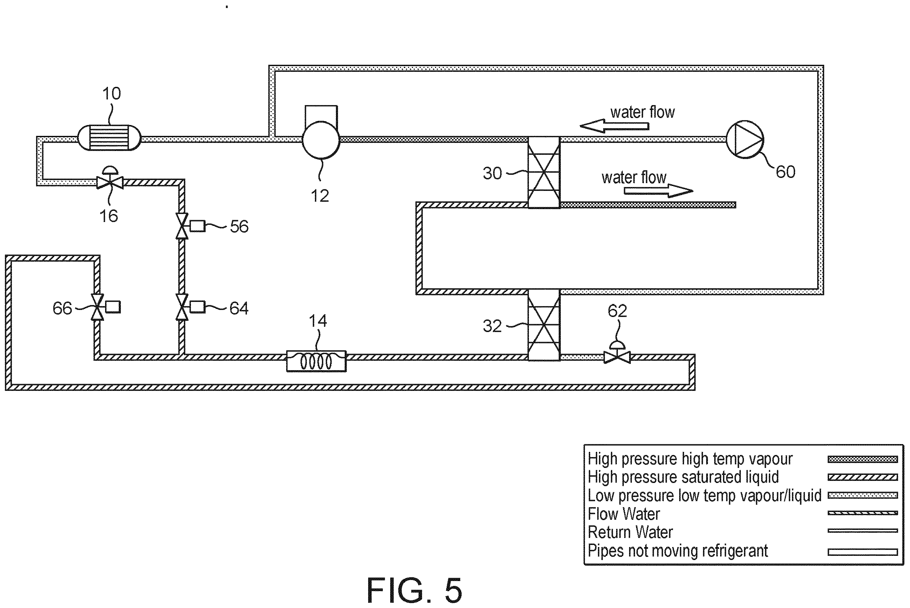

The second or commercial embodiment is described with reference to figure 5 which illustrates how this embodiment delivers heat when there is no cooling demand. Like components have been given the same reference numerals in this figure. As before there are two plate heat exchangers 30, 32 connected in series at the output of the compressor 12. Instead of bypassing the second heat exchanger 32 when there is cooling demand, as in the previous embodiment, the refrigerant flows through a first side of the second heat exchanger, but there is no flow through a second side of the heat exchanger. This is achieved by the provision of two alternative paths for the refrigerant leaving the heat exchanger 32 by the provision of solenoid valves 64, 66 downstream of the condenser 14. When there is cooling demand (with or without heating demand) valve 64 is open and valve 66 is closed. When there is only heating demand valve 66 is open and valve 64 is closed. A second thermal expansion device or valve (TEV) 62 is provided in the refrigerant flow path at an input to the second side of the heat exchanger 32 to cause the recycled refrigerant to evaporate and absorb energy from the surroundings. The heat from the space in which the plate heat exchanger 32 is located makes up the COP and efficiency in heating mode.

When there is only heating demand, within this alternative of the present invention, the second plate heat exchanger 32 is used as an evaporator. The sub cooled liquid refrigerant leaving plate heat exchanger 30 is being used to create a simulated load. Although this option is not as efficient as the domestic embodiment it still works as a boiler, has no carbon emissions and uses renewable energy. It also requires fewer components and therefore a simpler control system.

### Variations

Where the described embodiments uses three-way valve 38 and 40, it would also be possible to use paired two-way solenoid valves.

As a result of the use of the described system, there is a good GWP (global warming potential) reduction. This is because there are no direct carbon emissions via a flue. This lowers the user's carbon footprint, reducing capital cost and enhancing the payback period. The return on investment is currently estimated to be less than 16 months for commercial applications. The described system can also be interfaced with solar photovoltaic (PV) cells to provide the power source. This would mean there are no emissions at all. The system is driven by electricity and future proof refrigerants which include but are not limited to CO2, propane, and isobutene. In the embodiment described the GWP is reduced to 148 from 3922 an unmodified system.

It will be appreciated that the described system can be used to recover heat from a wide variety of refrigeration systems such as chillers, cellar coolers and freezers.

## Claims

1. A heating and cooling system comprises:
a heating system having a demand for heated water; and
a refrigeration system comprising
pipework enabling flow of refrigerant,
an evaporator (10) within a chilled space (18),
a compressor (12),
a condenser (14) which is located in a space separate from the chilled space,
a first expansion device (16),
switching means (56; 64, 66) configured to control a flow path of refrigerant in dependence on whether there is cooling demand with or without heating demand, or only heating demand;
a first plate heat exchanger (30) in which heat is exchanged between the refrigerant flowing from the compressor (12) through a first side of said first plate heat exchanger whilst the heating system water flows through a second side of said first plate heat exchanger;
a second plate heat exchanger (32) having a first side connected to the refrigerant output of the first plate heat exchanger (30); and
a second expansion device (62);
wherein the switching means (56; 64, 66) is configured such that, when there is cooling demand with or without heating demand, the switching means (64, 66) causes the refrigerant leaving the first side of the first plate heat exchanger to flow through a first side of the second plate heat exchanger (32) directly to the condenser;
wherein the switching means (56; 64, 66) is further configured such that, when there is only heating demand, the switching means (64,66) causes the refrigerant to take a flow path leaving the first side of the first plate heat exchanger (30) to flow to a first side of the second plate heat exchanger (32) to the condenser (14) to the second expansion device (62) to a second side of the second plate heat exchanger (32) before it goes directly back to the compressor (12)

2. A heating and cooling system comprises:
a heating system having a demand for heated water; and
a refrigeration system comprising
pipework enabling flow of refrigerant,
an evaporator (10) within a chilled space (18),
a compressor (12),
a condenser (14) which is located in a space separate from the chilled space,
a first expansion device (16),
switching means (56; 64, 66) configured to control a flow path of refrigerant in dependence on whether there is cooling demand with or without heating demand, or only heating demand;
a first plate heat exchanger (30) in which heat is exchanged between the refrigerant flowing from the compressor (12) through a first side of said first plate heat exchanger whilst the heating system water flows through a second side of said first plate heat exchanger;
a second plate heat exchanger (32) having a first side connected to the refrigerant output of the first plate heat exchanger (30); and
a second expansion device (62);
wherein the switching means (38, 48, 40) is configured such that, when there is cooling demand with or without heating demand, the switching means (38, 48, 40) causes the refrigerant leaving the first side of the first plate heat exchanger to bypass the second plate heat exchanger and second expansion device;
and wherein the switching means (38, 48, 40) is further configured such that, when there is only heating demand, the switching means causes the refrigerant to take an alternative flow path (36) leaving the first side of the first plate heat exchanger (30) to flow to a first side of the second plate heat exchanger (32) to the second expansion device (50) to the condenser (14) to a second side of the second plate heat exchanger (32) before it goes directly back to the compressor (12)

3. A system as claimed in claim 2, further comprising a third expansion device (52) which can be switched into the alternative flow path (36).

4. A system as claimed in claim 3, further comprising a low pressure switch (54) in the flow at the output of the condenser to control direction of the refrigerant to the third expansion device (52).

5. A system as claimed in in any one of the preceding claims, wherein the switching means comprises solenoid valves.

6. Apparatus (2) for converting an existing heating system and an existing refrigeration system into a system as claimed in any one of the preceding claims, which apparatus comprises the first and the second plate heat exchangers (30, 32), the second expansion device (50, 62), the switching means (38, 40, 42,44, 56; 64, 66), the configuration of said switching means (38, 40, 42, 44, 56; 64, 66) as defined in any one of the preceding claims, and associated pipework.

## Patentansprüche

1. Heiz- und Kühlsystem, das Folgendes umfasst:
ein Heizsystem mit einem Bedarf an erwärmtem Wasser; und
ein Kühlsystem, das Folgendes umfasst:
Verrohrung, die den Durchfluss von Kältemittel ermöglicht,
einen Verdampfer (10) innerhalb eines gekühlten Raums (18),
einen Kompressor (12),
einen Verflüssiger (14), der sich in einem von dem gekühlten Raum getrennten Raum befindet,
eine erste Expansionsvorrichtung (16),
Schaltmittel (56; 64, 66), konfiguriert zum Steuern eines Strömungswegs von Kältemittel in Abhängigkeit davon, ob Kühlbedarf mit oder ohne Heizbedarf oder nur Heizbedarf besteht;
einen ersten Plattenwärmetauscher (30), in dem Wärme zwischen dem vom Kompressor (12) durch eine erste Seite des genannten ersten Plattenwärmetauschers strömenden Kältemittel und dem durch eine zweite Seite des genannten ersten Plattenwärmetauschers strömenden Heizsystemwasser ausgetauscht wird;
einen zweiten Plattenwärmetauscher (32), dessen erste Seite mit dem Kältemittelausgang des ersten Plattenwärmetauschers (30) verbunden ist; und
eine zweite Expansionsvorrichtung (62);
wobei das Schaltmittel (56; 64, 66) so konfiguriert ist, dass, wenn Kühlbedarf mit oder ohne Heizbedarf besteht, das Schaltmittel (64, 66) bewirkt, dass das die erste Seite des ersten Plattenwärmetauschers verlassende Kältemittel durch eine erste Seite des zweiten Plattenwärmetauschers (32) direkt zum Verflüssiger fließt;
wobei das Schaltmittel (56; 64, 66) ferner so konfiguriert ist, dass, wenn nur Heizbedarf besteht, das Schaltmittel (64, 66) bewirkt, dass das Kältemittel einen Strömungsweg nimmt, der die erste Seite des ersten Plattenwärmetauschers (30) verlässt und zur ersten Seite des zweiten Plattenwärmetauschers (32) zum Verflüssiger (14) zur zweiten Expansionsvorrichtung (62) zu einer zweiten Seite des zweiten Plattenwärmetauschers (32) strömt, bevor es direkt zum Kompressor (12) zurückkehrt.

2. Heiz- und Kühlsystem, das Folgendes umfasst:
ein Heizsystem mit einem Bedarf an erwärmtem Wasser; und
ein Kühlsystem, das Folgendes umfasst:
Verrohrung, die den Durchfluss von Kältemittel ermöglicht,
einen Verdampfer (10) innerhalb eines gekühlten Raums (18),
einen Kompressor (12),
einen Verflüssiger (14), der sich in einem von dem gekühlten Raum getrennten Raum befindet,
eine erste Expansionsvorrichtung (16),
Schaltmittel (56; 64, 66), konfiguriert zum Steuern eines Strömungswegs von Kältemittel in Abhängigkeit davon, ob Kühlbedarf mit oder ohne Heizbedarf oder nur Heizbedarf besteht;
einen ersten Plattenwärmetauscher (30), in dem Wärme zwischen dem vom Kompressor (12) durch eine erste Seite des genannten ersten Plattenwärmetauschers strömenden Kältemittel und dem durch eine zweite Seite des genannten ersten Plattenwärmetauschers strömenden Heizsystemwasser ausgetauscht wird;
einen zweiten Plattenwärmetauscher (32), dessen erste Seite mit dem Kältemittelausgang des ersten Plattenwärmetauschers (30) verbunden ist; und
eine zweite Expansionsvorrichtung (62);
wobei die Schalteinrichtung (38, 48, 40) so konfiguriert ist, dass, wenn Kühlbedarf mit oder ohne Heizbedarf besteht, das Schaltmittel (38, 48, 40) bewirkt, dass das die erste Seite des ersten Plattenwärmetauschers verlassende Kältemittel den zweiten Plattenwärmetauscher und die zweite Expansionsvorrichtung umgeht;
und wobei das Schaltmittel (38, 48, 40) ferner so konfiguriert ist, dass, wenn nur Heizbedarf besteht, das Schaltmittel bewirkt, dass das Kältemittel einen alternativen Strömungsweg (36) nimmt, der die erste Seite des ersten Plattenwärmetauschers (30) verlässt und zu einer ersten Seite des zweiten Plattenwärmetauschers (32) zur zweiten Expansionsvorrichtung (50) zum Verflüssiger (14) zu einer zweiten Seite des zweiten Plattenwärmetauschers (32) strömt, bevor es direkt zum Kompressor (12) zurückkehrt.

3. System nach Anspruch 2, das ferner eine dritte Expansionsvorrichtung (52) umfasst, die in den alternativen Strömungsweg (36) geschaltet werden kann.

4. System nach Anspruch 3, das ferner einen Niederdruckschalter (54) im Strom am Ausgang des Verflüssigers umfasst, um die Richtung des Kältemittels zur dritten Expansionsvorrichtung (52) zu steuern.

5. System nach einem der vorherigen Ansprüche, wobei das Schaltmittel Magnetventile umfasst.

6. Vorrichtung (2) zur Umwandlung eines bestehenden Heizsystems und eines bestehenden Kühlsystems in ein System nach einem der vorherigen Ansprüche, wobei die Vorrichtung den ersten und den zweiten Plattenwärmetauscher (30, 32), die zweite Expansionsvorrichtung (50, 62), das Schaltmittel (38, 40, 42, 44, 56; 64, 66), die Konfiguration des genannten Schaltmittels (38, 40, 42, 44, 56; 64, 66), wie in einem der vorherigen Ansprüche definiert, und die assoziierte Verrohrung umfasst.

## Revendications

1. Un système de chauffage et de refroidissement qui comprend :
un système de chauffage possédant une demande pour de l'eau chauffée, et
un système de réfrigération comprenant
une installation de tuyauterie permettant l'écoulement d'un fluide réfrigérant,
un évaporateur (10) à l'intérieur d'un espace réfrigéré (18),
un compresseur (12),
un condensateur (14) qui est placé dans un espace séparé de l'espace réfrigéré,
un premier dispositif d'expansion (16),
un moyen de commutation (56, 64, 66) configuré de façon à commander un trajet d'écoulement d'un fluide réfrigérant selon qu'il existe une demande de refroidissement avec ou sans une demande de chauffage ou uniquement une demande de chauffage,
un premier échangeur thermique à plaques (30) dans lequel de la chaleur est échangée entre le fluide réfrigérant s'écoulant du compresseur (12) au travers d'un premier côté dudit premier échangeur thermique à plaques pendant que l'eau du système de chauffage s'écoule au travers d'un deuxième côté dudit premier échangeur thermique à plaques,
un deuxième échangeur thermique à plaques (32) possédant un premier côté raccordé à la sortie du fluide réfrigérant du premier échangeur thermique à plaques (30), et
un deuxième dispositif d'expansion (62),
où le moyen de commutation (56, 64, 66) est configuré de sorte que, lorsqu'il y a une demande de refroidissement avec ou sans une demande de chauffage, le moyen de commutation (64, 66) amène le fluide réfrigérant sortant du premier côté du premier échangeur thermique à plaques à s'écouler au travers d'un premier côté du deuxième échangeur thermique à plaques (32) directement vers le condensateur,
où le moyen de commutation (56, 64, 66) est configuré en outre de sorte que, lorsqu'il y a uniquement une demande de chauffage, le moyen de commutation (64, 66) amène le fluide réfrigérant à prendre un trajet d'écoulement sortant du premier côté du premier échangeur thermique à plaques (30) de façon à s'écouler vers un premier côté du deuxième échangeur thermique à plaques (32) vers le condensateur (14) vers le deuxième dispositif d'expansion (62) vers un deuxième côté du deuxième échangeur thermique à plaques (32) avant de retourner directement vers le compresseur (12).

2. Un système de chauffage et de refroidissement qui comprend :
un système de chauffage possédant une demande pour de l'eau chauffée, et
un système de réfrigération comprenant
une installation de tuyauterie permettant l'écoulement d'un fluide réfrigérant,
un évaporateur (10) à l'intérieur d'un espace réfrigéré (18),
un compresseur (12),
un condensateur (14) qui est placé dans un espace séparé de l'espace réfrigéré,
un premier dispositif d'expansion (16),
un moyen de commutation (56, 64, 66) configuré de façon à commander un trajet d'écoulement d'un fluide réfrigérant selon qu'il existe une demande de refroidissement avec ou sans une demande de chauffage ou uniquement une demande de chauffage,
un premier échangeur thermique à plaques (30) dans lequel de la chaleur est échangée entre le fluide réfrigérant s'écoulant du compresseur (12) au travers d'un premier côté dudit premier échangeur thermique à plaques pendant que l'eau du système de chauffage s'écoule au travers d'un deuxième côté dudit premier échangeur thermique à plaques,
un deuxième échangeur thermique à plaques (32) possédant un premier côté raccordé à la sortie du fluide réfrigérant du premier échangeur thermique à plaques (30), et
un deuxième dispositif d'expansion (62),
où le moyen de commutation (38, 48, 40) est configuré de sorte que, lorsqu'il y a une demande de refroidissement avec ou sans une demande de chauffage, le moyen de commutation (38, 48, 40) amène le fluide réfrigérant sortant du premier côté du premier échangeur thermique à plaques à contourner le deuxième échangeur thermique à plaques et le deuxième dispositif d'expansion,
et où le moyen de commutation (38, 48, 40) est configuré en outre de sorte que, lorsqu'il y a uniquement une demande de chauffage, le moyen de commutation amène le fluide réfrigérant à prendre un trajet d'écoulement de substitution (36) sortant du premier côté du premier échangeur thermique à plaques (30) de façon à s'écouler vers un premier côté du deuxième échangeur thermique à plaques (32) vers le deuxième dispositif d'expansion (50) vers le condensateur (14) vers un deuxième côté du deuxième échangeur thermique à plaques (32) avant de retourner directement vers le compresseur (12).

3. Un système selon la Revendication 2, comprenant en outre un troisième dispositif d'expansion (52) qui peut être commuté vers le trajet d'écoulement de substitution (36).

4. Un système selon la Revendication 3, comprenant en outre un commutateur basse pression (54) dans l'écoulement au niveau de la sortie du condensateur destiné à commander la direction du fluide réfrigérant vers le troisième dispositif d'expansion (52).

5. Un système selon l'une quelconque des Revendications précédentes, où le moyen de commutation comprend des électrovannes.

6. Un appareil (2) de conversion d'un système de chauffage existant et d'un système de réfrigération existant en un système selon l'une quelconque des Revendications précédentes, ledit appareil comprenant les premier et le deuxième échangeurs thermiques à plaques (30, 32), le deuxième dispositif d'expansion (50, 62), le moyen de commutation (38, 40, 42, 44, 56, 64, 66), la configuration dudit moyen de commutation (38, 40, 42, 44, 56, 64, 66) selon l'une quelconque des Revendications précédentes et une installation de tuyauterie associée.
